# EUROPÄISCHE PATENTSCHRIFT

(11) **EP 3 519 228 B1**
(45) Veröffentlichungstag und Bekanntmachung des Hinweises auf die Patenterteilung: **02.06.2021**
(21) Anmeldenummer: 17772061.2
(22) Anmeldetag: 25.09.2017
(51) Int. Cl.: B60K 17/16, F16H 48/00

(54) **ACHSGETRIEBE FÜR EIN KRAFTFAHRZEUG**
FINAL DRIVE FOR A MOTOR VEHICLE
PONT POUR VÉHICULE AUTOMOBILE

(30) Priorität: 28.09.2016 DE 102016218731
(43) Veröffentlichungstag der Anmeldung: 07.08.2019
(73) Patentinhaber: Audi AG, 85045 Ingolstadt (DE)
(72) Erfinder: MEIXNER, Christian, 85049 Ingolstadt (DE); BRANDL, Dirk, 85139 Wettstetten (DE); TSCHULLIK, Jürgen, 92334 Berching (DE)
(86) Internationale Anmeldenummer: PCT/EP2017/074227
(87) Internationale Veröffentlichungsnummer: WO 2018/060136

(56) Entgegenhaltungen:
- DE-A1- 3 710 582
- DE-A1-102007 003 675
- JP-A- S62 181 918
- US-A1- 2012 312 608

## Beschreibung

Die Erfindung betrifft ein Achsgetriebe für ein Kraftfahrzeug mit einer ersten Eingangswelle, einer zweiten Eingangswelle, einer ersten Ausgangswelle und einer zweiten Ausgangswelle, wobei die erste Eingangswelle mit der ersten Ausgangswelle mittels eines ersten Tellerradgetriebes und die zweite Eingangswelle mit der zweiten Ausgangswelle mittels eines zweiten Tellerradgetriebes permanent gekoppelt ist, die erste Eingangswelle und die zweite Eingangswelle koaxial zueinander angeordnet sind und die erste Ausgangswelle und die zweite Ausgangswelle sich ausgehend von dem jeweiligen Tellerradgetriebe in gegenüberliegende Richtungen erstrecken, wobei eine Achsebene die Drehachsen der Eingangswellen in sich aufnimmt und eine auf der Achsebene senkrecht stehende Ebene mit den Drehachsen der Ausgangswellen jeweils einen Winkel von mindestens 75° und höchstens 90° einschließt, und wobei ein mit der ersten Ausgangswelle starr verbundenes erstes Tellerrad des ersten Tellerradgetriebes und ein mit der zweiten Ausgangswelle starr verbundenes zweites Tellerrad des zweiten Tellerradgetriebes jeweils mittels eines ersten Radiallagers und eines zweiten Radiallagers in einem Getriebegehäuse des Achsgetriebes gelagert sind, wobei die Radiallager in Tandem-Anordnung oder in X-Anordnung zueinander angeordnet oder als Festlager und als Loslager ausgebildet sind, und dass in dem Getriebegehäuse ein Lagerelement angeordnet ist, das einen ersten Lagervorsprung und einen zweiten Lagervorsprung aufweist, wobei auf dem ersten Lagervorsprung das Tellerrad des ersten Tellerradgetriebes und auf dem zweiten Lagervorsprung das Tellerrad des zweiten Tellerradgetriebes gelagert ist.

Aus dem Stand der Technik ist beispielsweise die Druckschrift DE 37 10 582 A1 bekannt. Diese beschreibt einen permanenten Vierradantrieb für ein Kraftfahrzeug, wobei ein Differential zwischen der linken Vorderradwelle und der rechten Hinterradwelle und ein weiteres Differential zwischen der rechten Vorderradwelle und der linken Hinterradwelle derart angeordnet ist, dass beide Differenziale durch dieselbe Antriebseinheit antreibbar sind.

Das Achsgetriebe ist einer Achse des Kraftfahrzeugs, beispielsweise also einer Vorderachse, bevorzugt jedoch einer Hinterachse des Kraftfahrzeugs zugeordnet. Mithilfe des Achsgetriebes wird ein Drehmoment von einer Antriebseinrichtung des Kraftfahrzeugs an Räder des Kraftfahrzeugs übertragen. Anders ausgedrückt ist über das Achsgetriebe eine Wirkverbindung zwischen der Antriebseinrichtung des Kraftfahrzeugs und der Achse beziehungsweise deren Rädern hergestellt oder zumindest herstellbar. Die Antriebseinrichtung ist mit der ersten Eingangswelle und der zweiten Eingangswelle permanent gekoppelt oder zumindest koppelbar. Beispielsweise liegt die Wirkverbindung zwischen der Antriebseinrichtung und den beiden Eingangswellen über eine von dem Achsgetriebe verschiedene Getriebeeinrichtung vor. Die Getriebeeinrichtung kann beispielsweise als Differentialgetriebe, insbesondere als Achsdifferentialgetriebe, ausgestaltet sein. Die beiden Eingangswellen können insoweit als Kardanwellen vorliegen oder zumindest mit Kardanwellen gekoppelt sein, insbesondere permanent.

Beispielsweise sind die beiden Eingangswellen des Achsgetriebes permanent mit den Ausgangswellen der Getriebeeinrichtung gekoppelt, insbesondere starr. Die beiden Ausgangswellen des Achsgetriebes sind radseitig vorgesehen, also hinsichtlich eines Drehmomentflusses auf einer der Antriebseinrichtung abgewandten Seite der Tellerradgetriebe angeordnet. Die erste Ausgangswelle ist beispielsweise einem ersten Rad der Achse und die zweite Ausgangswelle wenigstens einem zweiten Rad derselben Achse zugeordnet, insbesondere permanent und/oder starr mit ihm gekoppelt. Selbstverständlich kann es jedoch vorgesehen sein, dass die Wirkverbindung zwischen der ersten Ausgangswelle und dem ersten Rad und/oder die Wirkverbindung zwischen der zweiten Ausgangswelle und dem zweiten Rad zumindest zeitweise unterbrechbar ist. Zu diesem Zweck kann in den Wirkverbindungen jeweils eine Schaltkupplung, beispielsweise eine Klauenkupplung, vorgesehen sein.

Innerhalb des Achsgetriebes ist die erste Eingangswelle permanent mit der ersten Ausgangswelle und die zweite Eingangswelle permanent mit der zweiten Ausgangswelle gekoppelt. Hierzu dienen das erste Tellerradgetriebe und das zweite Tellerradgetriebe. Mithilfe der Tellerradgetriebe wird eine Anordnung der Eingangswellen und der Ausgangswellen angewinkelt zueinander erreicht. Beispielsweise kann es dabei vorgesehen sein, dass die Tellerradgetriebe jeweils einen Hypoidversatz aufweisen, sodass die Ausgangswellen bezüglich der Eingangswellen versetzt angeordnet sind, insbesondere windschief zu diesen vorliegen, also beabstandet parallel von ihnen angeordnet sind. Dies führt jedoch zu einem großen Bauraumbedarf des Achsgetriebes.

Es ist Aufgabe der Erfindung, ein Achsgetriebe für ein Kraftfahrzeug vorzuschlagen, welches gegenüber bekannten Achsgetrieben Vorteile aufweist, insbesondere eine zuverlässige Lagerung der Tellerradgetriebe bei gleichzeitig geringerem Bauraumbedarf realisiert.

Dies wird erfindungsgemäß mit einem Achsgetriebe mit den Merkmalen des Anspruchs 1 erzielt. Dabei ist vorgesehen, dass das erste Radiallager zur Lagerung des jeweiligen Tellerrads auf dem ersten Lagervorsprung oder dem zweiten Lagervorsprung und das zweite Radiallager auf dem jeweils selben Lagervorsprung angeordnet ist, wobei das erste Radiallager einen ersten Innendurchmesser sowie einen ersten Außendurchmesser und das zweite Radiallager einen zweiten Innendurchmesser sowie einen zweiten Außendurchmesser aufweist, wobei der erste Innendurchmesser größer als der zweite Innendurchmesser und der erste Außendurchmesser größer als der zweite Außendurchmesser ist.

Grundsätzlich ist vorgesehen, dass die erste Eingangswelle und die zweite Eingangswelle koaxial zueinander angeordnet sind und die erste Ausgangswelle und die zweite Ausgangswelle sich ausgehend von dem jeweiligen Tellerradgetriebe in gegenüberliegende Richtungen erstrecken, wobei eine Achsebene die Drehachsen der Eingangswellen in sich aufnimmt und eine auf der Achsebene senkrecht stehende Ebene mit den Drehachsen der Ausgangswellen jeweils einen Winkel von mindestens 75° und höchstens 90° einschließt, und dass ein mit der ersten Ausgangswelle starr verbundenes erstes Tellerrad des ersten Tellerradgetriebes und/oder ein mit der zweiten Ausgangswelle starr verbundenes zweites Tellerrad des zweiten Tellerradgetriebes jeweils mittels eines ersten Radiallagers und eines zweiten Radiallagers, die in Tandemanordnung oder in X-Anordnung zueinander angeordnet oder als Festlager und als Loslager ausgebildet sind, in einem Getriebegehäuse des Achsgetriebes gelagert sind/ist.

Insgesamt sind also eine spezielle Anordnung der Eingangswellen und der Ausgangswellen sowie eine spezielle Lagerung wenigstens eines der Tellerräder, nämlich des ersten Tellerrads und des zweiten Tellerrads der beiden Tellerradgetriebe, vorgesehen. Diese Anordnung ermöglicht wiederum eine spezielle Ausgestaltung des Getriebegehäuses, welches beispielsweise mehrteilig ist. Zunächst sind die beiden Eingangswellen koaxial zueinander angeordnet. Beispielsweise verläuft die zweite Eingangswelle in der ersten Eingangswelle oder umgekehrt. Die beiden Ausgangswellen liegen sich im Wesentlichen gegenüber, insbesondere bezüglich der Symmetrieebene, und erstrecken sich ausgehend von dem jeweiligen Tellerwandgetriebe in gegenüberliegende Richtungen, vorzugsweise jeweils in die Richtung des entsprechenden Rads des Kraftfahrzeugs.

Sowohl die Drehachse der ersten Ausgangswelle als auch die Drehachse der zweiten Ausgangswelle schneidet beispielsweise die beiden Drehachsen der Eingangswellen beziehungsweise die gemeinsame Drehachse der Eingangswellen. Anders ausgedrückt ist es vorgesehen, dass Drehachsen der Ausgangswellen jeweils die Drehachsen der Eingangswellen schneiden. Entsprechend können die Tellerradgetriebe ohne Hypoidversatz ausgebildet sein. Auch eine Ausgestaltung mit Hypoidversatz ist jedoch realisierbar, bei welcher folglich wenigstens die Drehachse einer der Ausgangswellen die Drehachsen der Eingangswellen nicht schneiden. Vorzugsweise schneiden jedoch in diesem Fall die Drehachsen beider Ausgangswellen die Drehachsen der Eingangswellen nicht. Somit liegt insgesamt eine windschiefe Anordnung der Drehachsen der Ausgangswellen bezüglich der Drehachsen der Eingangswellen vor.

Zusätzlich ist es nun vorgesehen, dass die (gedachte) Achsebene die Drehachsen der Eingangswellen in sich aufnimmt. Die Achsebene ist bezüglich einer Einbaulage des Achsgetriebes im Wesentlichen waagerecht angeordnet. Entsprechend liegt die auf der Achsebene senkrecht stehende Ebene, welche ebenfalls die Drehachsen der Eingangswellen in sich aufnimmt, als Vertikalebene vor, ist also in Einbaulage des Achsgetriebes im Wesentlichen senkrecht angeordnet. Die auf der Achsebene senkrecht stehende Ebene schließt wenigstens im Schnitt, nämlich insbesondere im Querschnitt bezüglich der Drehachsen der Eingangswellen gesehen, mit den Drehachsen der Ausgangswellen jeweils einen Winkel von mindestens 75° und höchstens 90° ein.

Jede der Drehachsen schließt also mit der Ebene einen Winkel ein, der die genannten Voraussetzungen erfüllt. Die Winkel zwischen den Drehachsen und der Ebene können identisch, alternativ jedoch voneinander verschieden sein. Beispielsweise beträgt der Winkel beziehungsweise betragen die Winkel mindestens 75° und höchstens 90°. Bevorzugt betragen der Winkel beziehungsweise die Winkel mindestens 80°, mindestens 85°, mindestens 86°, mindestens 87°, mindestens 88° oder mindestens 89°, stets jedoch höchstens 90°. Das bedeutet, dass der Winkel beziehungsweise die Winkel genau gleich 90° oder auch kleiner als 90° sein können.

Zusätzlich oder alternativ liegt die auf der Achsebene senkrecht stehende Ebene wenigstens im Schnitt, nämlich insbesondere im Querschnitt bezüglich der Drehachsen der Eingangswellen gesehen, als Symmetrieebene für die Drehachsen der Ausgangswellen vor. Die Drehachsen der Ausgangswellen sind in diesem Fall insoweit hinsichtlich der Symmetrieebene symmetrisch zueinander angeordnet beziehungsweise ausgerichtet.

Mit der ersten Ausgangswelle ist nun das erste Tellerrad und mit der zweiten Ausgangswelle das zweite Tellerrad starr verbunden. Das erste Tellerrad ist Bestandteil des ersten Tellerradgetriebes, das zweite Tellerrad Bestandteil des zweiten Tellerradgetriebes. Wenigstens eines dieser Tellerräder, bevorzugt jedoch beide Tellerräder, sind nun jeweils mittels zweier Radiallager, nämlich des ersten Radiallagers und des zweiten Radiallagers, in dem Getriebegehäuse des Achsgetriebes gelagert. Die beiden Radiallager sind in Tandemanordnung oder in X-Anordnung zueinander angeordnet. Alternativ können sie auch als Festlager und als Loslager ausgebildet sein. In letzterem Fall bildet eines der Radiallager das Festlager und das jeweils andere der Radiallager das Loslager. Eine derartige Anordnung und/oder Ausgestaltung der Radiallager ermöglicht eine zuverlässige und kompakte Lagerung des Tellerrads beziehungsweise der Tellerräder an und/oder in dem Getriebegehäuse.

Eine weitere Ausgestaltung der Erfindung sieht vor, dass die Drehachsen der beiden Eingangswellen und die Drehachsen der beiden Ausgangswellen in der Achsebene liegen. Dies stellt eine besonders vorteilhafte Ausrichtung der Eingangswellen und der Ausgangswellen dar, welche eine äußerst kompakte Ausgestaltung des Achsgetriebes zulässt. Sind sowohl die Eingangswellen als auch die Ausgangswellen in der Achsebene angeordnet, so kann auf die vorstehende Definition unter Verwendung der Symmetrieebene verzichtet werden. Diese ist insoweit nicht mehr für die Definition der Achsebene notwendig.

Die Erfindung sieht vor, dass in dem Getriebegehäuse ein Lagerelement angeordnet ist, das einen ersten Lagervorsprung und einen zweiten Lagervorsprung aufweist, wobei auf dem ersten Lagervorsprung das erste Tellerrad des ersten Tellerradgetriebes und auf dem zweiten Lagervorsprung das zweite Tellerrad des zweiten Tellerradgetriebes gelagert ist. Um das Achsgetriebe besonders kompakt auszugestalten, ist in dem Getriebegehäuse das Lagerelement angeordnet. Das Lagerelement weist die beiden Lagervorsprünge, nämlich den ersten Lagervorsprung und den zweiten Lagervorsprung, auf. Die Lagervorsprünge dienen der Lagerung von Tellerrädern der beiden Tellerradgetriebe. Auf dem ersten Lagervorsprung ist insoweit das erste Tellerrad des ersten Tellerradgetriebes und auf dem zweiten Lagervorsprung das zweite Tellerrad des zweiten Tellerradgetriebes gelagert.

Die Lagerung ist vorzugsweise unmittelbar ausgestaltet, sodass das jeweilige Tellerrad auf dem entsprechenden Lagervorsprung aufsitzt. Es kann jedoch alternativ eine lediglich mittelbare Lagerung vorgesehen sein, bei welcher beispielsweise die Tellerräder über die jeweilige Ausgangswelle auf dem Lagervorsprung gelagert sind. Bei einer derartigen Ausgestaltung ist die Ausgangswelle unmittelbar auf beziehungsweise an dem Lagervorsprung gelagert. Die Lagerung des jeweiligen Tellerrads ist nur mittelbar über die Ausgangswelle vorgesehen. Das Tellerrad kann hierbei beispielsweise in axialer Richtung bezügliche seiner Drehachse beziehungsweise der Drehachse der Ausgangswelle von dem Lagervorsprung beabstandet angeordnet sein. Das erste Tellerrad ist starr mit der ersten Ausgangswelle verbunden oder alternativ einstückig mit ihr ausgestaltet. Dies kann analog auch für das zweite Tellerrad sowie die zweite Ausgangswelle vorgesehen sein.

Das Lagerelement ist eine separat von dem Getriebegehäuse ausgebildete Einrichtung. Zunächst werden also das Getriebegehäuse und das Lagerelement getrennt voneinander hergestellt und nachfolgend das Lagerelement an beziehungsweise in dem Getriebegehäuse angeordnet. Bevorzugt wird das Lagerelement zentral in dem Getriebegehäuse angeordnet, insbesondere zentral bezüglich der Drehachsen der beiden Eingangswellen gesehen. Insbesondere verlaufen die Drehachsen der beiden Eingangswellen durch das Lagerelement hindurch, schneiden dieses also. Um eine einfache Anordnung des Lagerelements in dem Getriebegehäuse zu ermöglichen, ist dieses bevorzugt mehrteilig ausgestaltet und weist hierzu beispielsweise eine erste Gehäuseschale und eine zweite Gehäuseschale auf. Die beiden Lagervorsprünge sind beispielsweise im Querschnitt bezüglich ihrer jeweiligen Längsmittelachse rund und gehen in axialer Richtung bevorzugt von einem Zentraldom des Lagerelements aus. Auf ihrem dem Zentraldom abgewandten Ende verfügen die Lagervorsprünge jeweils bevorzugt über ein freies Ende.

Die Erfindung sieht vor, dass das erste Radiallager zur Lagerung des jeweiligen Tellerrads auf dem ersten Lagervorsprung oder dem zweiten Lagervorsprung angeordnet ist, und dass das zweite Radiallager auf dem jeweils selben Lagervorsprung angeordnet ist. Bevorzugt sind beide Radiallager, also das erste Radiallager und das zweite Radiallager, auf dem ersten Lagervorsprung angeordnet, wenn es zur Lagerung des ersten Tellerrads dient und auf dem zweiten Lagervorsprung angeordnet, wenn es zur Lagerung des zweiten Tellerrads vorgesehen ist.

Unter der Anordnung des Radiallagers auf dem Lagervorsprung ist zu verstehen, dass es mit seinem Innenring auf dem jeweiligen Lagervorsprung aufsitzt. Das bedeutet, dass sein Innenring den Lagervorsprung in Umfangsrichtung vollständig umgreift und vorzugsweise in Umfangsrichtung zumindest teilweise durchgehend, insbesondere vollständig durchgehend, an ihm anliegt. Das bedeutet umgekehrt, dass der Außenring des Radiallagers an dem jeweiligen Tellerrad angreift. Somit ist eine Lagerung des Tellerrads an dem Getriebegehäuse zumindest teilweise über den entsprechenden Lagervorsprung vorgesehen, sodass das Tellerrad mittelbar, nämlich über den jeweiligen Lagervorsprung, an dem Getriebegehäuse gelagert ist.

Eine weitere Ausgestaltung der Erfindung sieht vor, dass das erste Radiallager an einer Innenlagerfläche des jeweiligen Tellerrads und das zweite Radiallager an einer Außenlagerfläche des jeweiligen Tellerrads oder der mit dem Tellerrad verbundenen Ausgangswelle anliegt. Die Innenlagerfläche wird von einem Bereich der Innenumfangsfläche des Tellerrads gebildet. Das Tellerrad weist insoweit eine Ausnehmung auf, welche koaxial zu seiner Drehachse beziehungsweise der Drehachse der entsprechenden Ausgangswelle ausgebildet ist. Das Radiallager greift nun in diese Ausnehmung ein. Hierzu ragt vorzugsweise der jeweilige Lagervorsprung in das entsprechende Tellerrad in axialer Richtung hinein. Beispielsweise durchgreift der Lagervorsprung hierzu eine Stirnseite des Tellerrads, insbesondere eine dem Lagerelement zugewandte Stirnseite des Tellerrads.

Während das erste Radiallager an der Innenlagerfläche des Tellerrads angreift beziehungsweise anliegt, greift das zweite Radiallager an der Außenlagerfläche an beziehungsweise liegt an dieser an. Die Außenlagerfläche wird von einer Außenumfangsfläche des Tellerrads beziehungsweise der Ausgangswelle, welche mit dem Tellerrad verbunden ist, ausgebildet. Bevorzugt liegt das erste Radiallager in axialer Richtung beabstandet von dem zweiten Radiallager an dem Tellerrad beziehungsweise der Ausgangswelle an. Die beiden Radiallager sollen insoweit an in axialer Richtung beabstandeten Stellen an dem Tellerrad beziehungsweise der Ausgangswelle angreifen, um insbesondere ein Verkippen des Tellerrads beziehungsweise der Ausgangswelle zu verhindern.

Im Rahmen einer weiteren Ausgestaltung der Erfindung ist vorgesehen, dass der erste Lagervorsprung und der zweite Lagervorsprung von einem Zentraldom des Lagerelements ausgehen. Der Zentraldom liegt insoweit zwischen den beiden Lagervorsprüngen vor, welche von gegenüberliegenden Seiten des Zentraldoms von ihm ausgehen. Beispielsweise ist der Zentraldom in etwa mittig in dem Getriebegehäuse angeordnet, vorzugsweise mittig bezüglich der Drehachsen der Eingangswellen. Bevorzugt verlaufen die Drehachsen der Eingangswellen zumindest durch das Lagerelement, insbesondere jedoch durch den Zentraldom, hindurch.

Eine besonders bevorzugte Ausgestaltung der Erfindung sieht vor, dass sich das zweite Radiallager in axialer Richtung bezüglich der Drehachse des jeweiligen Tellerrads an dem Getriebegehäuse abstützt. Hierzu liegt das zweite Radiallager beispielsweise mit seinem Außenring an dem Getriebegehäuse an, während es mit seinem Innenring das Tellerrad beziehungsweise die Ausgangswelle umgreift. Beispielsweise verfügt das Getriebegehäuse über einen Axiallagervorsprung, um das zweite Radiallager in axialer Richtung bezüglich des Getriebegehäuses zumindest in axialer Richtung nach außen festzusetzen, also in die von dem Lagerelement abgewandte Richtung. Bevorzugt weist zudem das Tellerrad ebenfalls einen Axiallagervorsprung auf, sodass insgesamt das zweite Radiallager in axialer Richtung gesehen einerseits an dem Axiallagervorsprung des Tellerrads und andererseits an dem Axiallagervorsprung des Getriebegehäuses anliegt und insgesamt das Tellerrad von den beiden Radiallagern in axialer Richtung festgelegt ist oder zumindest nahezu festgelegt ist.

Im Rahmen einer weiteren Ausführungsform der Erfindung kann vorgesehen sein, dass das Lagerelement, insbesondere der Zentraldom, an dem Getriebegehäuse befestigt ist, wobei das erste Radiallager nur über das Lagerelement mit dem Getriebegehäuse verbunden ist. Das Lagerelement ist in dem Getriebegehäuse angeordnet und dabei an diesem befestigt. Beispielsweise liegt das Lagerelement wenigstens bereichsweise an dem Getriebegehäuse an. Dies gilt insbesondere für den Zentraldom. Bevorzugt ist das Lagerelement mittels wenigstens einer Schraube an dem Getriebegehäuse befestigt. Beispielsweise ist das Getriebegehäuse dabei mehrteilig ausgestaltet und verfügt insoweit über eine erste Gehäuseschale und eine zweite Gehäuseschale. Die beiden Gehäuseschalen sind separat voneinander ausgebildet und liegen vorzugsweise in einer Kontaktebene aneinander an, welche in der Achsebene oder parallel zu dieser liegt.

Es kann nun vorgesehen sein, dass das Lagerelement an der ersten Gehäuseschale und an der zweiten Gehäuseschale befestigt ist, insbesondere auf gegenüberliegenden Seiten der Kontaktebene oder jeweils mittels wenigstens einer Schraube, deren Längsmittelachse bezüglich der Kontaktebene angewinkelt ist und/oder senkrecht auf ihr steht. Es kann zudem vorgesehen sein, dass das Lagerelement beidseitig einer gedachten Ebene, die senkrecht auf der Kontaktebene angeordnet ist und einen Schnittpunkt der Drehachsen der Ausgangswellen mit den Drehachsen der Eingangswellen in sich aufnimmt, jeweils an der ersten Gehäuseschale und/oder der zweiten Gehäuseschale befestigt ist. Das auf dem ersten Lagervorsprung oder dem zweiten Lagervorsprung angeordnete Radiallager ist nun ausschließlich über das Lagerelement mit dem Getriebegehäuse verbunden.

Schließlich sieht die Erfindung vor, dass das erste Radiallager einen ersten Innendurchmesser und einen ersten Außendurchmesser und das zweite Radiallager einen zweiten Innendurchmesser und einen zweiten Außendurchmesser aufweist, wobei der erste Innendurchmesser von dem zweiten Innendurchmesser und/oder der erste Außendurchmesser von dem zweiten Außendurchmesser verschieden ist. Bevorzugt ist dabei jedoch die Differenz zwischen dem ersten Außendurchmesser und dem ersten Innendurchmesser gleich der Differenz zwischen dem zweiten Außendurchmesser und dem zweiten Innendurchmesser, sodass die beiden Radiallager in radialer Richtung gesehen identische Abmessungen aufweisen.

Erfindungsgemäß ist es vorgesehen, dass der erste Innendurchmesser größer ist als der zweite Innendurchmesser und/oder der erste Außendurchmesser größer ist als der zweite Außendurchmesser. Das erste Radiallager ist insoweit größer ausgestaltet als das zweite Radiallager, wobei bevorzugt jedoch auf die vorstehend erläuterte Art und Weise die Differenz zwischen Innendurchmesser und Außendurchmesser für die beiden Radiallager identisch ist.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Seitenansicht eines Achsgetriebes für ein Kraftfahrzeug,
- Figur 2: eine schematische Schnittdarstellung durch ein Getriebegehäuse sowie ein in dem Getriebegehäuse angeordnetes Lagerelement,
- Figur 3: eine schematische Darstellung des Achsgetriebes in einer ersten Ausführungsform,
- Figur 4: eine schematische Darstellung einer zweiten Ausführungsform des Achsgetriebes,
- Figur 5: eine erste Variante einer dritten Ausführungsform des Achsgetriebes in einer schematischen Darstellung, sowie
- Figur 6: eine schematische Darstellung einer zweiten Variante der dritten Ausführungsform des Achsgetriebes.

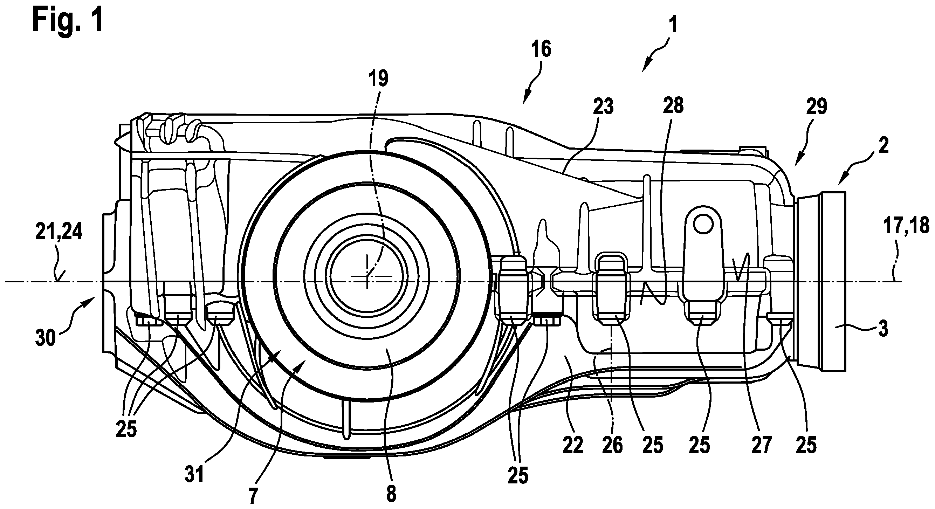

Die Figur 1 zeigt eine schematische Seitendarstellung eines Achsgetriebes 1 für ein Kraftfahrzeug. Dieses verfügt über eine erste Eingangswelle 2, von welcher hier ein Anschlussflansch 3 dargestellt ist. Koaxial zu der ersten Eingangswelle 2 ist eine hier nicht erkennbare zweite Eingangswelle 4 angeordnet. Die erste Eingangswelle 2 ist hierzu als Hohlwelle ausgestaltet und die zweite Eingangswelle 4 in der ersten Eingangswelle 2 angeordnet und/oder gelagert. Die zweite Eingangswelle 4 weist einen Anschlussflansch 5 auf, welcher vorzugsweise in dem Anschlussflansch 3 der ersten Eingangswelle 2 angeordnet ist. Die erste Eingangswelle 2 ist mittels eines ersten Tellerradgetriebes 6 mit einer ersten Ausgangswelle 7 permanent gekoppelt. Die erste Ausgangswelle 7 verfügt über einen Anschlussflansch 8, welcher hier erkennbar ist. Analog hierzu ist die zweite Eingangswelle 4 mittels eines zweiten Tellerradgetriebes 9 mit einer hier nicht erkennbaren zweiten Ausgangswelle 10 permanent gekoppelt, welche über einen Anschlussflansch 11 verfügt.

Das erste Tellerradgetriebe 6 besteht aus einem starr und permanent mit der ersten Eingangswelle 2 gekoppelten Tellerrad 12 und einem mit dem Tellerrad 12 kämmenden, permanent und starr mit der ersten Ausgangswelle 7 gekoppelten Tellerrad 13. Analog hierzu weist das zweite Tellerradgetriebe 9 ein starr und permanent mit der zweiten Eingangswelle 4 gekoppeltes Tellerrad 14 sowie ein mit dem Tellerrad 14 kämmendes sowie starr und permanent mit der zweiten Ausgangswelle 10 gekoppeltes Tellerrad 15 auf. Die Tellerradgetriebe 6 und 9 und entsprechend die Tellerräder 12, 13, 14 und 15 sind in einem Getriebegehäuse 16 des Achsgetriebes 1 angeordnet, insbesondere vollständig. In anderen Worten schließt das Getriebegehäuse 16 die Tellerradgetriebe 6 und 9 vorzugsweise vollständig ein.

Es wurde bereits darauf hingewiesen, dass die erste Eingangswelle 2 und die zweite Eingangswelle 4 koaxial zueinander angeordnet sind, wobei die zweite Eingangswelle 4 in der ersten Eingangswelle 2 vorliegt. Die Eingangswelle 2 und 4 weisen also miteinander zusammenfallende Drehachsen 17 und 18 auf. Die erste Ausgangswelle 7 und die zweite Ausgangswelle 10 erstrecken sich nun ausgehend von dem jeweiligen Tellerradgetriebe 6 beziehungsweise 9 in gegenüberliegende Richtungen. In dem hier dargestellten Ausführungsbeispiel erstreckt sich somit die erste Ausgangswelle 7 aus der Zeichenebene heraus, während die zweite Ausgangswelle 10 in die Zeichenebene hinein verläuft. Eine Drehachse 19 der ersten Ausgangswelle 7 beziehungsweise jedes Anschlussflansches 8 ist in vertikaler Richtung leicht schräg angeordnet und schneidet die Drehachsen 17 und 18. Entsprechendes gilt für eine hier nicht erkennbare Drehachse 20 der zweiten Ausgangswelle 10 beziehungsweise ihres Anschlussflansches 11.

Die Eingangswellen 2 und 4 beziehungsweise ihre Drehachsen 17 und 18 liegen in einer Achsebene 21, welche grundsätzlich horizontal angeordnet ist. Anders ausgedrückt steht auf der Achsebene 21 eine gedachte Ebene senkrecht, welche im Schnitt, insbesondere im Querschnitt bezüglich der Drehachsen 17 und 18 gesehen, als Symmetrieebene für die Drehachsen 19 und 20 der Ausgangswellen 7 und 10 vorliegt. Die Drehachsen 19 und 20 sind insoweit symmetrisch zu dieser gedachten Ebene angeordnet und ausgerichtet, welche aufgrund der horizontalen Anordnung der Achsebene 21 auch als Vertikalebene bezeichnet werden kann.

Weil die gedachte Ebene als Symmetrieebene für die Drehachsen 19 und 20 dient, schneiden die Drehachsen 19 und 20 sowohl die Symmetrieebene als auch die Achsebene jeweils unter demselben Winkel. Anders ausgedrückt liegt also die Drehachse 19 bezüglich der Achsebene 21 beziehungsweise der Symmetrieebene unter einem ersten Winkel und die Drehachse 20 bezüglich der Achsebene 21 beziehungsweise der Symmetrieebene unter einem zweiten Winkel vor, wobei die beiden Winkel gleich sind. Ganz allgemein schneiden insoweit die Drehachsen 19 und 20 die Achsebene 21. Es kann auch vorgesehen sein, dass die Drehachsen 19 und 20 vollständig in der Achsebene 21 liegen.

Um eine platzsparende Ausgestaltung des Achsgetriebes 1 zu ermöglichen, ist das Getriebegehäuse 16 mehrteilig ausgestaltet und weist hierbei eine erste Gehäuseschale 22 und eine zweite Gehäuseschale 23 auf, die separat voneinander ausgebildet sind und in einer Kontaktebene 24 aneinander anliegen, die in der Achsebene 21 oder parallel zu dieser liegt. Die erste Gehäuseschale 22 und die zweite Gehäuseschale 23 sind mittels wenigstens einer Schraube 25, in dem hier dargestellten Ausführungsbeispiel mittels einer Vielzahl von Schrauben 25, miteinander verschraubt. Wenigstens eine der Schrauben 25, bevorzugt jedoch alle der Schrauben 25, weist nun eine Längsmittelachse 26 auf, die bezüglich der Kontaktebene 24 angewinkelt ist, diese also unter einem bestimmten Winkel schneidet.

Insoweit ist es nicht vorgesehen, dass die Schraube 25 beziehungsweise ihre Längsmittelachse 26 parallel zu der Kontaktebene 24 angeordnet sind oder die Längsmittelachse 26 in der Kontaktebene 24 liegt. Vielmehr steht besonders bevorzugt die Längsmittelachse 26 senkrecht auf der Kontaktebene 24. Zudem ist es vorzugsweise vorgesehen, dass wenigstens eine der Schrauben 25 von der Kontaktebene 24 durchgriffen ist, also von der Kontaktebene 24 geschnitten wird.

Das bedeutet für die Anordnung der Schraube 25, dass diese seitlich an dem Getriebegehäuse 16 vorliegt und nicht etwa an einem separaten Befestigungsflansch, welcher an einer Oberseite oder einer Unterseite des Getriebegehäuses 16 zur Befestigungsschalen 22 und 23 aneinander vorgesehen wäre. Ein derartiger Befestigungsflansch ist bei der hier beschriebenen vorteilhaften Ausgestaltung des Achsgetriebes 1 schlichtweg nicht vorgesehen. Mit einer derartigen Ausgestaltung kann der Bauraumbedarf in vertikaler Richtung, also in der Symmetrieebene im Vergleich zu anderen Achsgetrieben 1 deutlich reduziert werden.

An der ersten Gehäuseschale 22 liegt eine in der Kontaktebene 24 liegende plane erste Anlagefläche 27 und an der zweiten Gehäuseschale 23 eine in der Kontaktebene 24 liegende plane zweite Anlagefläche 28 vor. Die beiden Anlagenflächen 27 und 28 liegen nach der Montage der Gehäuseschalen 22 und 23 flächig, insbesondere vollflächig, aneinander an. Unter der vollflächigen Anordnung ist zu verstehen, dass die gesamte erste Anlagefläche 27 an der gesamten zweiten Anlagefläche 28 anliegt. Jede der Anlageflächen 27 und 28 deckt insoweit die jeweils andere Anlagefläche 28 beziehungsweise 27 vollständig ab.

Die Schraube 25 durchgreift nun sowohl die erste Anlagefläche 27 als auch die zweite Anlagefläche 28. Sie greift insoweit sowohl in die erste Gehäuseschale 22 als auch in die zweite Gehäuseschale 23 zu deren Befestigung aneinander ein. In dem hier dargestellten Ausführungsbeispiel ist es vorgesehen, dass sich die erste Anlagefläche 27 in Richtung der Drehachsen 17 und 18 von einem Ende 29 des Getriebegehäuses 16 bis zu seinem anderen Ende 30 erstreckt. Zusätzlich oder alternativ gilt dies für die zweite Anlagefläche 28. Besonders bevorzugt erstrecken sich also sowohl die erste Anlagefläche 27 als auch die zweite Anlagefläche 28 einerseits bis hin zu dem Ende 29 und andererseits bis hin zu dem Ende 30.

Zwischen den Enden 29 und 30 können die Anlageflächen 27 und 28 jedoch unterbrochen sein. In dem hier dargestellten Ausführungsbeispiel ist dies für beide Anlageflächen aufgrund einer ersten Austrittsausnehmung 31 für die erste Ausgangswelle 7 beziehungsweise ihren Anschlussflansch 8 sowie eine zweite Austrittsausnehmung 32 für die zweite Ausgangswelle 10 beziehungsweise ihren Anschlussflansch 11 der Fall. Die erste Ausgangswelle 7 durchgreift insoweit die erste Austrittsausnehmung 31 beziehungsweise ist in dieser angeordnet, während die zweite Ausgangswelle 10 die zweite Austrittsausnehmung 32 durchgreift beziehungsweise in dieser angeordnet ist.

Besonders bevorzugt ist es vorgesehen, dass die Austrittsausnehmungen 31 und 32 jeweils zu gleichen Teilen in der Gehäuseschale 22 und der zweiten Gehäuseschale 23 ausgebildet sind. Zumindest liegt jedoch jede der Austrittsausnehmungen 31 und 32 zumindest teilweise in der ersten Gehäuseschale 22 und zumindest teilweise in der zweiten Gehäuseschale 23 vor. Die Anlageflächen 27 und 28 weisen insoweit jeweils zwei Teilflächen auf, welche in axialer Richtung bezüglich der Drehachsen 17 und 18 gesehen auf gegenüberliegenden Seiten der Austrittsausnehmungen 31 und 32 vorliegen.

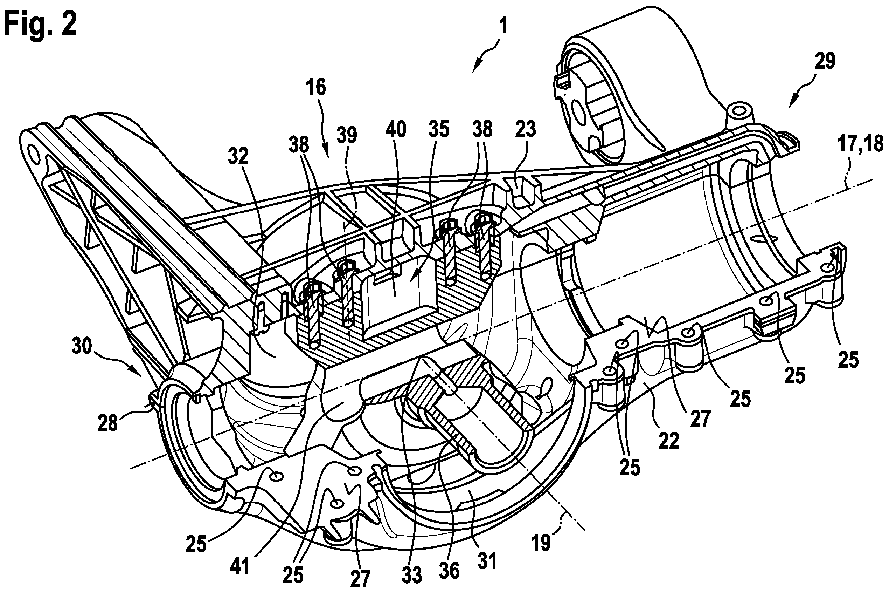

Die Figur 2 zeigt eine schematische Teilschnittdarstellung eines Teils des Achsgetriebes 1. Dabei sind die Eingangswellen 2 und 4 sowie die Ausgangswellen 7 und 10 nicht dargestellt. Dies gilt ebenso für die Tellerradgetriebe 6 und 9. Grundsätzlich wird jedoch dennoch auf die vorstehenden Ausführungen Bezug genommen. Hier ist nun deutlich erkennbar, dass die Drehachse 19 die Drehachsen 17 und 18 an einem Schnittpunkt 33 schneidet. Dies gilt analog auch für die Drehachse 20 an einem hier nicht dargestellten Schnittpunkt 34, wobei dieser mit dem Schnittpunkt 33 zusammenfallen kann.

Weiterhin ist nun erkennbar, dass in dem Getriebegehäuse 16 in einer bevorzugten Ausgestaltung des Achsgetriebes 1 ein Lagerelement 35 angeordnet ist. Dieses verfügt über einen ersten Lagervorsprung 36 sowie über einen diesem gegenüberliegenden, hier nicht erkennbaren zweiten Lagervorsprung 37. Auf dem ersten Lagervorsprung 36 ist das mit der ersten Ausgangswelle 7 starr verbundene erste Tellerrad 13 und auf dem zweiten Lagervorsprung 37 das mit der zweiten Ausgangswelle 10 starr verbundene Tellerrad 15 des zweiten Tellerradgetriebes 9 drehbar gelagert. Der erste Lagervorsprung 36 ragt dabei in Richtung der ersten Austrittsausnehmung 31, insbesondere ragt er in diese hinein oder durchgreift sie sogar in Richtung der Drehachse 19. Umgekehrt ragt der zweite Lagervorsprung 37 in Richtung der zweiten Austrittsausnehmung 32. Auch er kann in diese hineinragen oder sie sogar in Richtung der Drehachse 20 durchgreifen.

Das Lagerelement 35 ist nun einerseits an der ersten Gehäuseschale 22 und andererseits an der zweiten Gehäuseschale 23 befestigt. Die Befestigung erfolgt jeweils mittels wenigstens einer Schraube 38, vorzugsweise jeweils mittels mehrerer Schrauben 38. Dies ist hier lediglich für die Befestigung des Lagerelements 35 an der zweiten Gehäuseschale 23 erkennbar. Bevorzugt sind jedoch die entsprechenden Ausführungen auf die Befestigung des Lagerelements 35 an der ersten Gehäuseschale 22 übertragbar. Es ist erkennbar, dass die Schraube 38 beziehungsweise die Schrauben 38 jeweils eine Längsmittelachse 39 aufweisen. Die Schraube 38 beziehungsweise ihre Längsmittelachse 39 ist nun bezüglich der Kontaktebene 24 (hier nicht dargestellt) angewinkelt. Insbesondere steht sie senkrecht auf der Kontaktebene 24. Das bedeutet also, dass die Längsmittelachse 39 der Schraube 38 bevorzugt parallel zu der Längsmittelachse 26 der Schraube 25 ausgerichtet ist.

Zur Halterung des Lagerelements 35 an dem Getriebegehäuse 16 greift die Schraube 38 in einen Zentraldom 40 des Lagerelements 35 ein. Von dem Zentraldom 40 gehen auf gegenüberliegenden Seiten der Symmetrieebene die Lagervorsprünge 36 und 37 ab. Weiterhin kann in dem Zentraldom 40, insbesondere zwischen den Lagervorsprüngen 36 und 37, eine Durchtrittsausnehmung 41 zur Aufnahme der zweiten Eingangswelle 4 ausgebildet sein. Vorzugsweise durchgreift insoweit die zweite Eingangswelle 4 das Lagerelement 35, insbesondere dessen Durchtrittsausnehmung 41 in axialer Richtung bezüglich der Drehachsen 17 und 18 vollständig.

Die Tellerradgetriebe 6 und 9 sind dabei bevorzugt derart ausgestaltet, dass die mit den Eingangswellen 2 und 4 verbundenen Tellerräder 12 und 14 auf gegenüberliegenden Seiten des Lagerelements 35 vorliegen, also auf gegenüberliegenden Seiten einer auf den Drehachsen 17 und 18 senkrecht stehenden Ebene. Insbesondere liegt das Tellerrad 12 vollständig auf einer Seite dieser Ebene und das Tellerrad 14 vollständig auf der gegenüberliegenden Seite der Ebene vor. Das Lagerelement 35 ist bevorzugt einstückig und/oder materialeinheitlich ausgestaltet. Beispielsweise besteht es aus demselben Material wie die Gehäuseschalen 22 und 23. Die Verwendung des Lagerelements 35 erlaubt eine besonders kompakte Ausgestaltung des Achsgetriebes 1, insbesondere in vertikaler Richtung.

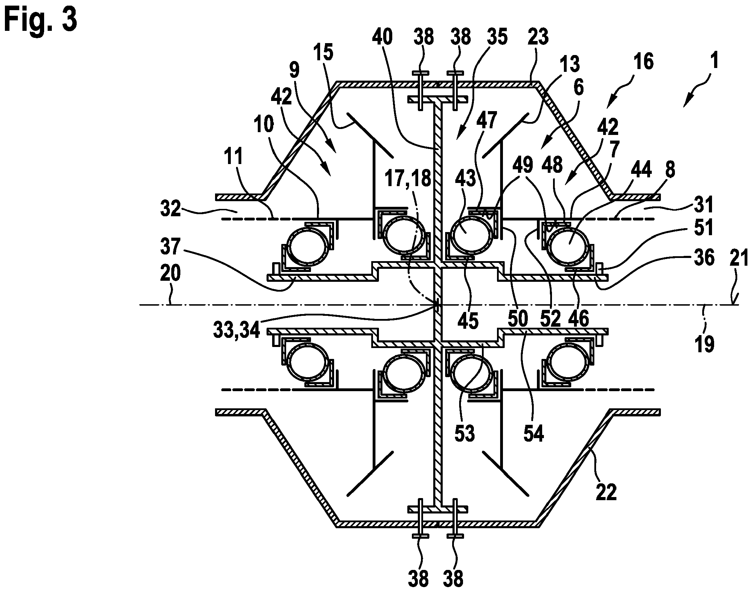

Die Figur 3 zeigt eine schematische Schnittdarstellung des Achsgetriebes 1, nämlich einen Querschnitt bezüglich der Drehachsen 17 und 19, wobei die Schnittebene senkrecht auf den Drehachsen 17 und 18 steht und die Drehachsen 19 und 20 vorzugsweise in sich aufnimmt. Die Blickrichtung in dem Querschnitt ist in Richtung des Endes 29 gerichtet. Die Eingangswellen 2 und 4 sind dabei nicht dargestellt. Es ist erkennbar, dass jedes der Tellerräder 13 und 15 beziehungsweise jede der Ausgangswellen 7 und 10 jeweils mittels einer Lageranordnung 42 in dem Getriebegehäuse 16 gelagert ist. Die Lageranordnung 42 für die Tellerräder 13 und 15 beziehungsweise die entsprechenden Ausgangswellen 7 und 10 sind analog ausgestaltet, insbesondere jedoch spiegelbildlich. Nachfolgend wird näher auf die Lageranordnung 42 für das Tellerrad 13 beziehungsweise die erste Ausgangswelle 7 eingegangen. Die Ausführungen sind jedoch stets auf die Lageranordnung 42 für das Tellerrad 15 beziehungsweise die zweite Ausgangswelle 10 übertragbar.

Die Lageranordnung 42 verfügt über ein erstes Radiallager 43 sowie ein zweites Radiallager 44. Diese sind in O-Anordnung zueinander angeordnet. Alternativ können sie auch als Festlager und Loslager ausgebildet sein. In letzterem Fall bildet eines der Radiallager 43 und 44 das Festlager und das jeweils andere der Radiallager 43 und 44 das Loslager. Nachfolgend wird jedoch auf die hier dargestellte O-Anordnung näher eingegangen. Die Ausführungen sind jedoch stets auf die Ausgestaltung der Radiallager 43 und 44 als Festlager und Loslager übertragbar. Die Radiallager 43 und 44 sind vorzugsweise als Wälzlager, insbesondere als Kugellager, ausgestaltet.

Die Radiallager 43 und 44 sind beide auf dem ersten Lagervorsprung 36 angeordnet. Das bedeutet, dass sie mit ihren Innenringen 45 und 46 auf dem ersten Lagervorsprung 36 aufsitzen. Außenringe 47 und 48 der Radiallager 43 und 44 dagegen sind in dem Tellerrad 13 und/oder der ersten Ausgangswelle 7 angeordnet. Entsprechend liegen die Außenringe 47 und 48 an einer Innenlagerfläche 49 des Tellerrads 13 beziehungsweise der ersten Ausgangswelle 7 an. Es ist vorgesehen, dass sich das erste Radiallager 43 in axialer Richtung bezüglicher der Drehachse 19 an dem Zentraldom 40 des Lagerelements 35 abstützt. In anderen Worten ist das erste Radiallager 43 in axialer Richtung bezüglich der Drehachse 19 zwischen dem Zentraldom 40 und dem Tellerrad 13 beziehungsweise einem Axiallagervorsprung 50 des Tellerrads 13 angeordnet. Insbesondere liegt das Radiallager 43 permanent an dem Zentraldom 40 und andererseits permanent an dem Axiallagervorsprung 50 an.

Das zweite Radiallager 44 ist vorzugsweise mittels eines Befestigungsmittels 51 in axialer Richtung nach außen, also in die von dem Zentraldom 40 abgewandte Richtung, festgesetzt. Als Befestigungsmittel 51 wird beispielsweise ein Sprengring oder dergleichen verwendet. Insbesondere ist das Befestigungsmittel 51 wieder lösbar. Das Radiallager 44 ist vorzugsweise zwischen dem Befestigungsmittel 51 und dem Tellerrad 13 beziehungsweise einem Axiallagervorsprung 52 des Tellerrads 13 beziehungsweise der ersten Ausgangswelle 7 angeordnet. Bevorzugt liegt das zweite Radiallager 44 einerseits permanent an dem Befestigungsmittel 51 und andererseits permanent an dem Axiallagervorsprung 52 an.

Die Axiallagervorsprünge 50 und 52 können voneinander verschieden und insbesondere in axialer Richtung voneinander beabstandet angeordnet sein. Die Axiallagervorsprünge 50 und 52 können jedoch auch als gemeinsamer Axiallagervorsprung ausgestaltet sein, wobei das erste Radiallager 43 auf einer Seite und das zweite Radiallager 44 auf in axialer Richtung abgewandter Seite dieses gemeinsamen Axiallagervorsprungs vorliegt. Es wird deutlich, dass die Lageranordnung 42, also sowohl das erste Radiallager 43 als auch das zweite Radiallager 44, lediglich über das Lagerelement 35 an dem Getriebegehäuse 16 befestigt ist. Die Radiallager 43 und 44 greifen also ausschließlich über das Lagerelement 35 an dem Getriebegehäuse 16 an.

Weiterhin ist es erkennbar, dass der erste Lagervorsprung 36 einen ersten Bereich 53 sowie einen zweiten Bereich 54 aufweist, welche sich hinsichtlich ihres Durchmessers unterscheiden. So weist der erste Lagervorsprung 36 in dem ersten Bereich 53 einen ersten Durchmesser und in dem zweiten Bereich 54 einen zweiten Durchmesser auf, wobei der erste Durchmesser größer ist als der zweite Durchmesser. Der erste Bereich 53 grenzt vorzugsweise unmittelbar an den Zentraldom 40 an, jedenfalls ist er auf der dem Zentraldom 40 zugewandten Seite des zweiten Bereichs 54 angeordnet. Die beiden Bereiche 53 und 54 grenzen bevorzugt unmittelbar in axialer Richtung bezüglich der Drehachse 19 aneinander an.

Das erste Radiallager 43 sitzt nun in dem ersten Bereich 53 und das zweite Radiallager 44 in dem zweiten Bereich 54 auf dem ersten Lagervorsprung 36 auf. Insoweit weist der Innenring 45 einen größeren Durchmesser auf als der Innenring 46. Vorzugsweise sind die Radiallager 43 und 44 in radialer Richtung gleich groß, sodass analog zu den Innenringen 45 und 46 der Außenring 47 einen größeren Durchmesser aufweist als der Außenring 48. Selbstverständlich können die Radiallager 43 und 44 jedoch derart gewählt werden, dass die Durchmesserdifferenz zwischen den Innenringen 45 und 46 von der Durchmesserdifferenz der Außenringe 47 und 48 verschieden ist. Beispielsweise sind hierbei die Innenringe 45 und 46 mit unterschiedlichen Durchmessern ausgeführt, während die Außenringe 47 und 48 den gleichen Durchmesser aufweisen.

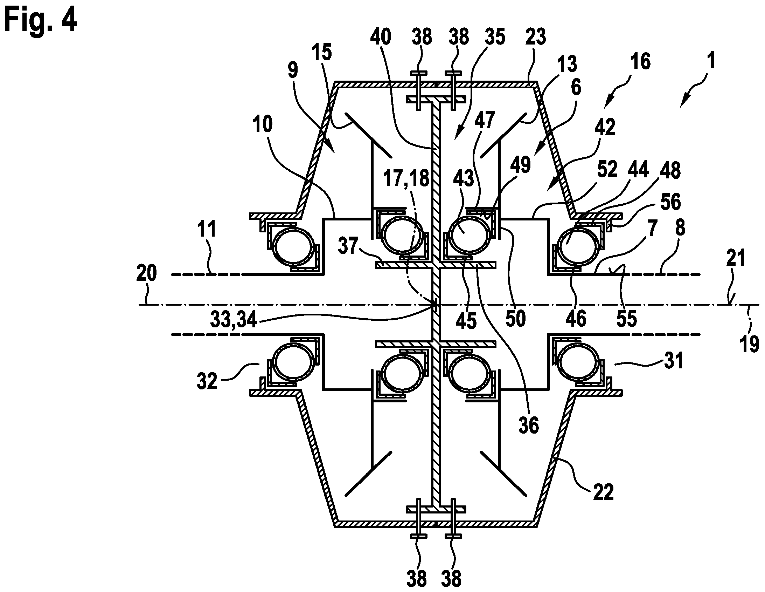

Die Figur 4 zeigt eine - nicht erfindungsgemäße - zweite Ausführungsform des Achsgetriebes 1, wiederum in einer Schnittdarstellung. Grundsätzlich wird auf die vorstehenden Ausführungen verwiesen und nachfolgend lediglich auf die Unterschiede eingegangen. Diese liegen darin, dass die Radiallager 43 und 44 der Lageranordnung 42 nunmehr in Tandem-Anordnung zueinander angeordnet sind. Alternativ wäre auch eine Anordnung der Radiallager 43 und 44 in X-Anordnung oder wiederum - wie vorstehend bereits erläutert - eine Ausgestaltung der Radiallager 43 und 44 als Festlager und Loslager möglich. Nachfolgend wird auf die Tandem-Anordnung genauer eingegangen. Die Ausführungen sind jedoch auf die X-Anordnung und die Ausgestaltung als Festlager und Loslager übertragbar.

Das erste Radiallager 43 ist analog zu der ersten Ausführungsform des Achsgetriebes 1 angeordnet. Entsprechend sitzt es mit seinem Innenring 45 auf dem ersten Lagervorsprung 36. In axialer Richtung stützt es sich vorzugsweise einerseits an dem Zentraldom 40 und andererseits an dem Axiallagervorsprung 50 ab. Unterschiede ergeben sich jedoch hinsichtlich des zweiten Radiallagers 44. Dieses sitzt mit seinem Innenring 45 auf einer Außenlagerfläche 55 des Tellerrads 13 beziehungsweise der ersten Ausgangswelle 7. Während also das erste Radiallager 43 in das Tellerrad 13 beziehungsweise die Ausgangswelle 7 eingreift, umgreift das zweite Radiallager 44 das Tellerrad 13 beziehungsweise die Ausgangswelle 7. Folglich kann der erste Lagervorsprung 36 kürzer ausfallen und einen einheitlichen Durchmesser aufweisen. Auch das Befestigungsmittel 51 kann entfallen.

Das zweite Radiallager 44 greift einerseits an dem Tellerrad 13 beziehungsweise der Ausgangswelle 7 und andererseits direkt an dem Getriebegehäuse 16, insbesondere an beiden Gehäuseschalen 22 und 23, an. Der Axiallagervorsprung 52 wird nunmehr von einer Anlageschulter des Tellerrads 13 beziehungsweise der Ausgangswelle 7 gebildet. Diese kann wiederum mittels einer Durchmesseränderung dargestellt sein. Um das zweite Radiallager 44 in axialer Richtung bezüglich des Getriebegehäuses 16 zumindest nach außen festzusetzen, weist das Getriebegehäuse 16 ebenfalls einen Axiallagervorsprung 56 auf. Dieser ist vorzugsweise sowohl an der ersten Gehäuseschale 22 als auch an der zweiten Gehäuseschale 23 ausgebildet. Das zweite Radiallager 44 liegt nun in axialer Richtung bezüglich der Drehachse 19 gesehen zwischen dem Axiallagervorsprung 52 und dem Axiallagervorsprung 56 vor. Besonders bevorzugt liegt er permanent einerseits an dem Axiallagervorsprung 52 und permanent andererseits an dem Axiallagervorsprung 56 an.

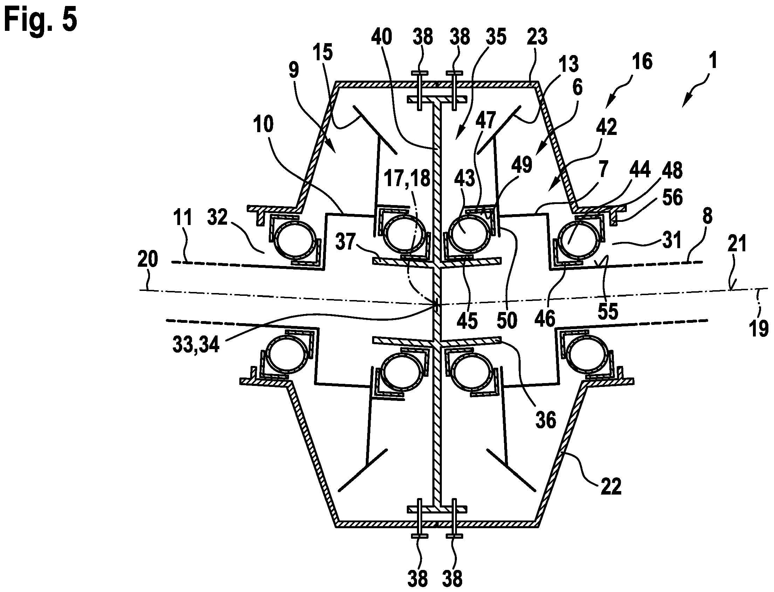

Die Figur 5 zeigt eine erste Variante einer - nicht erfindungsgemäßen - dritten Ausführungsform des Achsgetriebes 1. Dargestellt ist dabei erneut eine schematische Querschnittsdarstellung gemäß den vorstehenden Ausführungen. Die Lageranordnung 42 ist analog zu der vorstehend beschriebenen zweiten Ausführungsform ausgeführt. Auch eine Lageranordnung 42 gemäß der ersten Ausführungsform kann jedoch verwendet werden. Auf die vorstehenden Ausführungen wird insoweit Bezug genommen. Nachfolgend wird lediglich auf die Unterschiede zu den ersten beiden Ausführungsformen eingegangen. Diese liegen darin, dass die Tellerräder 13 und 15 und mithin die Drehachsen 19 und 20 nicht parallel zueinander verlaufen, sondern vielmehr gegeneinander angewinkelt sind.

Das bedeutet, dass die Drehachsen 19 und 20 weiterhin die Drehachsen 17 und 18 in den Schnittpunkten 33 und 34 schneiden, wobei die Schnittpunkte 33 und 34 zusammenfallen können. Ganz allgemein ausgedrückt schneiden die Drehachsen 19 und 20 jeweils beide Drehachsen 17 und 18. Die Drehachsen 19 und 20 können zusätzlich einander schneiden oder alternativ windschief zueinander angeordnet sein, insbesondere parallel beabstandet zueinander. In einer hier dargestellten ersten Variante schneiden sich die Drehachsen 19 und 20. Dabei sind die Drehachsen 19 und 20 jeweils um denselben Winkel gegenüber der Achsebene 21 beziehungsweise der Kontaktebene 24 angewinkelt, sodass die senkrecht auf der Kontaktebene 24 stehende und die Drehachsen 17 und 18 aufnehmende Ebene als Symmetrieebene für die Drehachsen 19 und 20 dient.

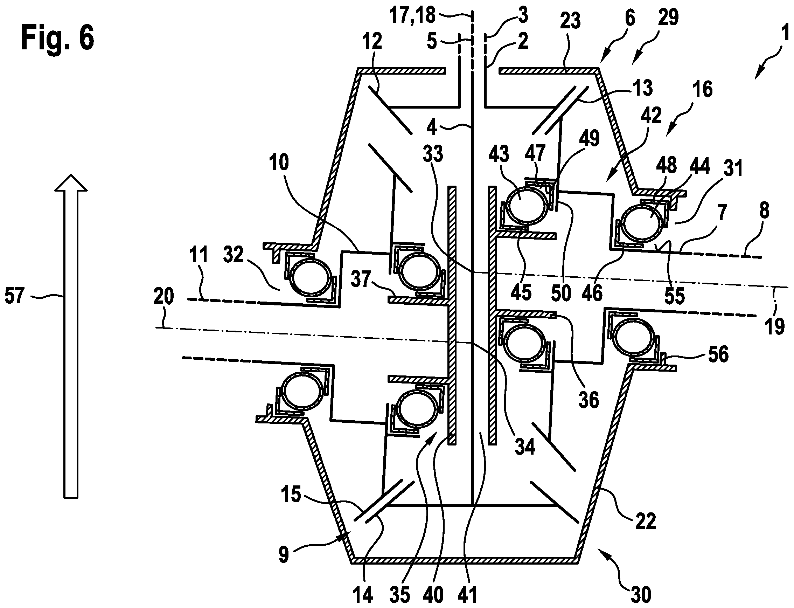

In der Figur 6 ist eine zweite Variante der dritten Ausführungsform dargestellt. Gezeigt ist hierbei eine Schnittdarstellung durch das Achsgetriebe, nämlich eine Längsschnittdarstellung bezüglich der Drehachse 17 und 18. Die Schnittebene ist dabei derart gewählt, dass eine Blickrichtung hin zu der ersten Gehäuseschale 22 vorliegt. Auf die vorstehenden Ausführungen wird ausdrücklich Bezug genommen. In Ergänzung zu diesen ist hier nun deutlich zu erkennen, dass die Tellerräder 12 und 14 der Tellerradgetriebe 6 und 9 auf gegenüberliegenden Seiten des Lagerelements 35 angeordnet sind. Hierzu durchgreift - wie bereits vorstehend erläutert - die zweite Eingangswelle 4 das Lagerelement 35, insbesondere durchgreift sie dabei die Durchtrittsausnehmung 41. Eine Fahrtrichtung eines Kraftfahrzeugs, welchem das Achsgetriebe 1 zugeordnet ist, ist durch den Pfeil 57 angedeutet.

Zusätzlich oder alternativ zu der vorstehend beschriebenen ersten Variante, bei welcher die Drehachsen 19 und 20 bezüglich der Achsebene angewinkelt sind, kann es nun vorgesehen sein, dass die Drehachsen 19 und 20 auch in axialer Richtung bezüglich der Drehachsen 17 und 18 gegeneinander versetzt sind. Beispielsweise sind hierzu die Tellerradgetriebe 6 und 9 derart ausgestaltet, dass ein Kegelwinkel vorliegt, welcher von 90° verschieden ist. Im Rahmen der vorstehend beschriebenen Ausführungsformen und der ersten Variante ist dagegen bevorzugt der Kegelwinkel gleich 90°. Aus der Verlagerung der Drehachsen 19 und 20 in axialer Richtung gegeneinander ergeben sich zwei voneinander beabstandete Schnittpunkte 33 und 34.

Das beschriebene Achsgetriebe 1 ermöglicht eine äußerst kompakte Ausgestaltung. Dies gilt insbesondere dann, wenn auf der dem Achsgetriebe 1 abgewandten Seite der Eingangswellen 2 und 4 eine weitere Getriebeeinrichtung, insbesondere ein Differentialgetriebe, vorzugsweise ein Achsdifferentialgetriebe, angeordnet ist. Das Achsgetriebe 1 dient somit lediglich zur Herstellung der permanenten Wirkverbindungen zwischen der ersten Eingangswelle 2 und der ersten Ausgangswelle 7 einerseits sowie der zweiten Eingangswelle 4 und der zweiten Ausgangswelle 10 andererseits.

## Patentansprüche

1. Achsgetriebe (1) für ein Kraftfahrzeug, mit einer ersten Eingangswelle (2), einer zweiten Eingangswelle (4), einer ersten Ausgangswelle (7) und einer zweiten Ausgangswelle (10), wobei die erste Eingangswelle (2) mit der ersten Ausgangswelle (7) mittels eines ersten Tellerradgetriebes (6) und die zweite Eingangswelle (4) mit der zweiten Ausgangswelle (10) mittels eines zweiten Tellerradgetriebes (9) permanent gekoppelt ist, die erste Eingangswelle (2) und die zweite Eingangswelle (4) koaxial zueinander angeordnet sind und die erste Ausgangswelle (7) und die zweite Ausgangswelle (10) sich ausgehend von dem jeweiligen Tellerradgetriebe (6,9) in gegenüberliegende Richtungen erstrecken, wobei eine Achsebene (21) die Drehachsen (17,18) der Eingangswellen (2,4) in sich aufnimmt und eine auf der Achsebene (21) senkrecht stehende Ebene mit den Drehachsen (19,20) der Ausgangswellen (7,10) jeweils einen Winkel von mindestens 75° und höchstens 90° einschließt, und wobei ein mit der ersten Ausgangswelle (7) starr verbundenes erstes Tellerrad (13) des ersten Tellerradgetriebes (6) und ein mit der zweiten Ausgangswelle (10) starr verbundenes zweites Tellerrad (15) des zweiten Tellerradgetriebes (9) jeweils mittels eines ersten Radiallagers (43) und eines zweiten Radiallagers (44) in einem Getriebegehäuse (16) des Achsgetriebes (1) gelagert sind, wobei die Radiallager (43,44) in Tandem-Anordnung oder in X-Anordnung zueinander angeordnet oder als Festlager und als Loslager ausgebildet sind, und dass in dem Getriebegehäuse (16) ein Lagerelement (35) angeordnet ist, das einen ersten Lagervorsprung (36) und einen zweiten Lagervorsprung (37) aufweist, wobei auf dem ersten Lagervorsprung (36) das Tellerrad (13) des ersten Tellerradgetriebes (6) und auf dem zweiten Lagervorsprung (37) das Tellerrad (15) des zweiten Tellerradgetriebes (9) gelagert ist, **dadurch gekennzeichnet, dass** das erste Radiallager (43) zur Lagerung des jeweiligen Tellerrads (13,15) auf dem ersten Lagervorsprung (36) oder dem zweiten Lagervorsprung (37) und das zweite Radiallager (44) auf dem jeweils selben Lagervorsprung (36,37) angeordnet ist, wobei das erste Radiallager (43) einen ersten Innendurchmesser sowie einen ersten Außendurchmesser und das zweite Radiallager (44) einen zweiten Innendurchmesser sowie einen zweiten Außendurchmesser aufweist, wobei der erste Innendurchmesser größer als der zweite Innendurchmesser und der erste Au-βendurchmesser größer als der zweite Außendurchmesser ist.

2. Achsgetriebe nach Anspruch 1, **dadurch gekennzeichnet, dass** die Drehachsen (17,18) der beiden Eingangswellen (2,4) und die Drehachsen (19,20) der beiden Ausgangswellen (7,10) in der Achsebene (21) liegen.

3. Achsgetriebe nach einem der vorhergehenden Ansprüche, **dadurch gekennzeichnet, dass** das erste Radiallager (43) an einer Innenlagerfläche (49) des jeweiligen Tellerrads (13,15) und das zweite Radiallager (44) an einer Außenlagerfläche (55) des jeweiligen Tellerrads (13,15) oder der mit dem Tellerrad (13,15) verbundenen Ausgangswelle (7,10) anliegt.

4. Achsgetriebe nach einem der vorhergehenden Ansprüche, **dadurch gekennzeichnet, dass** der erste Lagervorsprung (36) und der zweite Lagervorsprung (37) von einem Zentraldom (40) des Lagerelements (35) ausgehen.

5. Achsgetriebe nach Anspruch 4, **dadurch gekennzeichnet, dass** sich das erste Radiallager (43) in axialer Richtung bezüglich einer Drehachse (19,20) des jeweiligen Tellerrads (13,15) an dem Zentraldom (40) abstützt.

6. Achsgetriebe nach Anspruch 4 oder 5, **dadurch gekennzeichnet, dass** das Lagerelement (35), insbesondere der Zentraldom (40) an dem Getriebegehäuse (16) befestigt ist, wobei das erste Radiallager (43) nur über das Lagerelement (35) mit dem Getriebegehäuse (16) verbunden ist.

## Claims

1. Final drive (1) for a motor vehicle, having a first input shaft (2), a second input shaft (4), a first output shaft (7) and a second output shaft (10), wherein the first input shaft (2) is permanently coupled to the first output shaft (7) by means of a first ring gear transmission (6) and the second input shaft (4) is permanently coupled to the second output shaft (10) by means of a second ring gear transmission (9), the first input shaft (2) and the second input shaft (4) are arranged coaxially to each other and the first output shaft (7) and the second output shaft (10) extend in opposite directions from the respective ring gear transmission (6, 9), wherein an axial plane (21) includes the axes of rotation (17, 18) of the input shafts (2, 4) and a plane perpendicular to the axial plane (21) encloses an angle of at least 75° and at most 90° with each of the axes of rotation (19, 20) of the output shafts (7, 10), and wherein a first ring gear (13) of the first ring gear transmission (6), which first ring gear is rigidly connected to the first output shaft (7), and a second ring gear (15) of the second ring gear transmission (9), which second ring gear is rigidly connected to the second output shaft (10), are each mounted by means of a first radial bearing (43) and a second radial bearing (44) in a transmission housing (16) of the final drive (1), wherein the radial bearings (43, 44) are arranged in a tandem arrangement or in an X-arrangement with respect to one another or are configured as fixed bearing and as floating bearing, and that a bearing element (35) is arranged in the transmission housing (16), which bearing element has a first bearing projection (36) and a second bearing projection (37), wherein the ring gear (13) of the first ring gear transmission (6) is mounted on the first bearing projection (36) and the ring gear (15) of the second ring gear transmission (9) is mounted on the second bearing projection (37), **characterised in that** the first radial bearing (43) for mounting the respective ring gear (13, 15) is arranged on the first bearing projection (36) or the second bearing projection (37) and the second radial bearing (44) is arranged on the respective same bearing projection (36, 37), wherein the first radial bearing (43) has a first internal diameter and a first external diameter and the second radial bearing (44) has a second internal diameter and a second external diameter, the first internal diameter being greater than the second internal diameter and the first external diameter being greater than the second external diameter.

2. Final drive according to claim 1, **characterised in that** the axes of rotation (17, 18) of the two input shafts (2, 4) and the axes of rotation (19, 20) of the two output shafts (7, 10) lie in the axial plane (21).

3. Final drive according to any one of the preceding claims, **characterised in that** the first radial bearing (43) bears against an inner bearing surface (49) of the respective ring gear (13, 15) and the second radial bearing (44) bears against an outer bearing surface (55) of the respective ring gear (13, 15) or of the output shaft (7, 10) connected to the ring gear (13, 15).

4. Final drive according to any one of the preceding claims, **characterised in that** the first bearing projection (36) and the second bearing projection (37) extend from a central dome (40) of the bearing element (35).

5. Final drive according to claim 4, **characterised in that** the first radial bearing (43) is supported, in the axial direction with respect to an axis of rotation (19, 20) of the respective ring gear (13, 15), on the central dome (40).

6. Final drive according to claim 4 or 5, **characterised in that** the bearing element (35), in particular the central dome (40), is fastened to the transmission housing (16), the first radial bearing (43) being connected to the transmission housing (16) only via the bearing element (35).

## Revendications

1. Essieu-engrenage (1) pour un véhicule automobile, comprenant un premier arbre d'entrée (2), un second arbre d'entrée (4), un premier arbre de sortie (7) et un second arbre de sortie (10), dans lequel le premier arbre d'entrée (2) est couplé de manière permanente au premier arbre de sortie (7) au moyen d'une première transmission à couronne dentée (6) et le second arbre d'entrée (4) est couplé de manière permanente au second arbre de sortie (10) au moyen d'une seconde transmission à couronne dentée (9), le premier arbre d'entrée (2) et le second arbre d'entrée (4) sont disposés coaxialement l'un par rapport à l'autre et le premier arbre de sortie (7) et le second arbre de sortie (10) s'étendent dans des directions opposées à partir de la transmission à couronne dentée (6, 9) respective, dans lequel les axes de rotation (17, 18) des arbres d'entrée (2, 4) s'inscrivent dans un plan axial (21) et un plan placé perpendiculairement sur ledit plan axial (21) forme respectivement un angle de minimum 75° et de maximum 90° avec les axes de rotation (19, 20) des arbres de sortie (7, 10), et dans lequel une première couronne dentée (13) de la première transmission à couronne dentée (6) reliée de manière rigide au premier arbre de sortie (7) et une seconde couronne dentée (15) de la seconde transmission à couronne dentée (9) reliée de manière rigide au second arbre de sortie (10) sont montées respectivement dans un carter d'engrenage (16) de l'essieu-engrenage (1) au moyen d'un premier palier radial (43) et d'un second palier radial (44), dans lequel les paliers radiaux (43, 44) sont disposés selon un agencement en tandem ou un agencement en X l'un par rapport à l'autre ou sont formés en tant que paliers fixes et en tant que paliers libres, et en ce qu'un élément de palier (35) est disposé dans le carter d'engrenage (16), qui présente une première saillie de palier (36) et une seconde saillie de palier (37), dans lequel la couronne dentée (13) de la première transmission à couronne dentée (6) est montée sur la première saillie de palier (36) et la couronne dentée (15) de la seconde transmission à couronne dentée (9) est montée sur la seconde saillie de palier (37), **caractérisé en ce que** le premier palier radial (43) pour le montage de la couronne dentée (13, 15) respective est disposé sur la première saillie de palier (36) ou la seconde saillie de palier (37) et le second palier radial (44) est disposé sur la même saillie de palier (36, 37) respective, dans lequel le premier palier radial (43) présente un premier diamètre intérieur ainsi qu'un premier diamètre extérieur, et le second palier radial (44) présente un second diamètre intérieur ainsi qu'un second diamètre extérieur, dans lequel le premier diamètre intérieur est supérieur au second diamètre extérieur et le premier diamètre extérieur est supérieur au second diamètre extérieur.

2. Essieu-engrenage selon la revendication 1, **caractérisé en ce que** les axes de rotation (17, 18) des deux arbres d'entrée (2, 4) et les axes de rotation (19, 20) des deux arbres de sortie (7, 10) se situent dans le plan axial (21).

3. Essieu-engrenage selon l'une quelconque des revendications précédentes, **caractérisé en ce que** le premier palier radial (43) repose sur une surface de palier intérieur (49) de la couronne dentée (13, 15) respective et le second palier radial (44) repose sur une surface de palier extérieur (55) de la couronne dentée (13, 15) respective ou sur l'arbre de sortie (7, 10) relié à la couronne dentée (13, 15).

4. Essieu-engrenage selon l'une quelconque des revendications précédentes, **caractérisé en ce que** la première saillie de palier (36) et la seconde saillie de palier (37) partent d'un dôme central (40) de l'élément de palier (35).

5. Essieu-engrenage selon la revendication 4, **caractérisé en ce que** le premier palier radial (43) prend appui sur le dôme central (40) en direction axiale par rapport à un axe de rotation (19, 20) de la couronne dentée (13, 15) respective.

6. Essieu-engrenage selon la revendication 4 ou 5, **caractérisé en ce que** l'élément de palier (35), en particulier le dôme central (40) est fixé au carter d'engrenage (16), dans lequel le premier palier radial (43) est uniquement relié par l'intermédiaire de l'élément de palier (35) au carter d'engrenage (16).
